# EUROPÄISCHE PATENTSCHRIFT

(11) **EP 2 357 124 B1**
(45) Veröffentlichungstag und Bekanntmachung des Hinweises auf die Patenterteilung: **07.05.2014**
(21) Anmeldenummer: 11001237.4
(22) Anmeldetag: 15.02.2011
(51) Int. Cl.: B62H 5/14

(54) **Zweirad-Schloss**
Two-wheeler lock
Serrure à deux roues

(30) Priorität: 16.02.2010 DE 102010008055
(43) Veröffentlichungstag der Anmeldung: 17.08.2011
(73) Patentinhaber: ABUS August Bremicker Söhne KG, 58300 Wetter-Vollmarstein (DE)
(72) Erfinder:
(74) Vertreter: Manitz, Finsterwald & Partner GbR

(56) Entgegenhaltungen:
- DE-A1-102005 041 268
- DE-A1-102008 020 950

## Beschreibung

Die Erfindung betrifft ein Zweirad-Schloss mit einem Sperrriegel, welcher zwischen einer Verriegelungsstellung und einer Öffnungsstellung verstellbar ist, wobei das Schloss zumindest ein Sicherungselement umfasst, welches zwischen einer Sicherungsstellung und einer Entsicherungsstellung versetzbar ist und mit einem Sicherungsabschnitt des Sperrriegels zusammenwirkt, um den Sperrriegel in der Verriegelungsstellung und/oder der Öffnungsstellung zu sichern.

Ein derartiges Schloss dient zum Sichern eines Zweirads gegen eine unbefugte Benutzung. Aus DE 10 2005 041 268 A1 ist ein Zweirad-Schloss mit einem Drehbügel als Sperrriegel und einem als Riegel bezeichneten Sicherungselement bekannt, wobei dieses Sicherungselement in Richtung einer Sicherungsstellung vorgespannt ist, in welcher es den Drehbügel in der Verriegelungsstellung oder der Öffnungsstellung sichert oder blockiert. Das dort offenbarte Schloss weist ferner eine zusätzliche Blockiereinrichtung auf, die den Riegel gegen eine Bewegung in Richtung der Entsicherungsstellung blockiert. Die Blockiereinrichtung verhindert ein unbefugtes kurzzeitiges Entsichern des Bügels nach der sogenannten "Hammerschlagmethode", bei der durch einen Schlag auf das Schloss das Sicherungselement entgegen seiner Vorspannung sich kurzzeitig in Richtung seiner Entsicherungsstellung bewegen lässt. Um das Sicherungselement in seine Entsicherungsstellung bewegen zu können, muss bei der DE 10 2005 041 268 A1 zunächst die Blockierungseinrichtung deaktiviert werden.

Eine derartige Sicherung gegen ein unbefugtes Öffnen nach der Hammerschlagmethode verursacht jedoch zusätzlichen baulichen Aufwand und erfordert einen erhöhten Bauraum.

Es ist die Aufgabe der Erfindung, ein Zweirad-Schloss der eingangs genannten Art zu schaffen, das Sicherheit gegen gewaltsames Öffnen gewährleistet und dabei einfach im Aufbau und kostengünstig zu fertigen ist.

Die Lösung der Aufgabe erfolgt durch ein Zweirad-Schloss mit den Merkmalen des Anspruchs 1 und insbesondere dadurch, dass das Sicherungselement einen Steuerabschnitt aufweist, welcher mit einer durch mechanische oder elektromechanische Mittel angetriebenen jeweiligen Kulisse durch Zwangsführung zusammenwirkt, um das Sicherungselement zu versetzen.

Durch die Zwangsführung des Sicherungselements wird ein konstruktiv vereinfachtes und damit kostengünstig zu fertigendes Schloss geschaffen, bei dem auf eine Vorspannung des Sicherungselements mittels einer Feder oder dergleichen und auf zusätzliche Mittel zum Blockieren des Sicherungselements in der Sicherungsstellung verzichtet wird, ohne dass die Gefahr besteht, dass das Schloss beispielsweise mittels der eingangs erwähnten Hammerschlagmethode auf unbefugte Weise geöffnet werden kann. Aufgrund der Zwangsführung des jeweiligen Sicherungselements an der zugeordneten Kulisse ist also keine zusätzliche Blockiereinrichtung erforderlich.

Die genannten mechanischen Mittel können beispielsweise einen Schließzylinder umfassen, dessen drehbarer Zylinderkern mit einer exzentrischen Antriebseinrichtung drehfest gekoppelt ist, um bei Drehbetätigung des Schließzylinders die genannte Kulisse anzutreiben. Die genannten elektromechanischen Mittel können einen Elektromotor umfassen, dessen Abtriebswelle mit einer exzentrischen Antriebseinrichtung drehfest oder antriebswirksam gekoppelt ist, um bei Einschalten des Elektromotors die genannte Kulisse anzutreiben.

Gemäß einer bevorzugten Ausführungsform ist das Sicherungselement senkrecht zur Verstellrichtung des Sperrriegels versetzbar und/ oder der genannte Sicherungsabschnitt des Sperrriegels ist durch eine Eingriffsvertiefung gebildet, mit der das Sicherungselement in der Sicherungsstellung in Eingriff steht. Dadurch wird eine zuverlässige Sicherung des Sperrriegels in der Verriegelungsstellung und optional auch in der Öffnungsstellung erreicht und ein Verklemmen des Sicherungselements mit dem Sperrriegel zuverlässig verhindert.

Es ist bevorzugt, dass die Kulisse oder die Kulissen an einem Steuerelement vorgesehen sind, das linear und/oder quer zu der Bewegungsrichtung des oder der Sicherungselemente bewegbar ist. Hierdurch lassen sich auf einfache Weise die Sicherungselemente zwischen der Sicherungs- und Entsicherungsstellung verschieben. Alternativ zu einem linear bewegbaren Steuerelement kann auch ein drehbares Steuerelement vorgesehen werden.

Gemäß einer weiteren bevorzugten Ausführungsform umfasst das Schloss zwei Sicherungselemente, deren Steuerabschnitte mit einer jeweiligen Kulisse in Eingriff stehen, wobei die Kulissen derart ausgebildet sind, dass beim Bewegen des Steuerelements die Sicherungselemente gegenläufig zueinander versetzt werden und in einer Sicherungsstellung mit einem jeweiligen Sicherungsabschnitt des Sperrriegels zusammenwirken, wobei die jeweiligen Sicherungsabschnitte an einander gegenüberliegenden Seiten des Sperrriegels vorgesehen sind. Mit dieser Ausgestaltung wird eine besonders zuverlässige Sicherung oder Blockierung des Sperrriegels erreicht, da sich dadurch letztlich die Fläche erhöht, über die der Sperrriegel mit den Sicherungselementen in Eingriff steht. Ein gewaltsames Öffnen des Schlosses wird dadurch noch weiter erschwert. Ferner wird auch bei vergleichsweise großen Fertigungstoleranzen noch eine zuverlässige Sicherung des Sperrriegels erzielt, sodass das Schloss insgesamt besonders kostengünstig hergestellt werden kann.

Falls die beiden Kulissen an einem einzigen, gemeinsamen Steuerelement ausgebildet sind, ergibt sich ein besonders einfacher Aufbau des Schlosses.

Bevorzugt sind die mechanischen oder elektromechanischen Mittel ausgebildet, einen Steuerzapfen exzentrisch um eine Achse drehbar anzutreiben, welcher mit dem Steuerelement zusammenwirkt, um eine Rotation des Steuerzapfens in eine Linearbewegung des Steuerelements umzusetzen.

Hinsichtlich dieser Weiterbildung ist es von Vorteil, wenn das Steuerelement eine Kulissenführung aufweist, insbesondere ein quer zur Bewegungsrichtung des Steuerelements ausgerichtetes Langloch, welche mit dem Steuerzapfen zusammenwirkt. Hierdurch ist ein besonders einfaches Versetzen des oder der Sicherungselemente möglich. Alternativ kann auch ein drehbar antreibbarer Steuernocken vorgesehen werden, um eine Linearbewegung des Steuerelements zu bewirken.

Gemäß einer weiteren vorteilhaften Ausführungsform weist das Schloss eine Steuereinrichtung zum Betätigen der elektromechanischen Mittel auf. Diese Steuereinrichtung kann zusätzlich Mittel für eine Berechtigungsprüfung umfassen, sodass die elektromechanischen Mittel nur bei positivem Ausgang dieser Berechtigungsprüfung betätigt werden.

Es ist ferner von Vorteil, wenn die Steuereinrichtung Mittel zum Erkennen einer Verstellposition des Sperrriegels aufweist und dazu ausgelegt ist, die elektromechanischen Mittel zum Versetzen des oder der Sicherungselemente in Sicherungsstellung nur dann zu betätigen, wenn sich der Sperrriegel in der Verriegelungsstellung oder der Öffnungsstellung befindet, sodass das oder die Sicherungselemente mit dem oder den Sicherungsabschnitten zuverlässig in Eingriff bringbar sind. Hierdurch wird insbesondere vermieden, dass das oder die Sicherungselemente gegen den Sperrriegel gepresst werden, während dieser gerade zwischen der Verriegelungsstellung und der Öffnungsstellung verstellt wird, was einen Anstieg der zur Verstellung des Sperrriegels aufzubringenden Kräfte zur Folge hätte. Diese Ausgestaltung ist von besonderem Vorteil, wenn nicht nur die Sicherungselemente sondern auch der Sperrriegel über elektromechanische Mittel angetrieben wird. Da in der Regel zum Betätigen der elektromechanischen Mittel lediglich eine Batterie mit begrenzter Kapazität zur Verfügung steht, stellt eine Minimierung der zu überwindenden Reibung eine besonders wirksame Maßnahme zur Erhöhung der Batteriestandzeit und damit der Betriebssicherheit des Zweirad-Schlosses dar.

Gemäß einer weiteren bevorzugten Ausführungsform umfasst der Sperrriegel wenigstens eine Vertiefung, die mit einer in Richtung des Sperrriegels vorgespannten Anschlagfeder zusammenwirkt, um einen jeweiligen Endanschlag für die Verriegelungsstellung oder die Öffnungsstellung des Sperrriegels zu bilden. Die Vertiefung kann beispielsweise durch einen schrägen Einschnitt gebildet sein, um eine Kerbe zu bilden, oder durch eine Bohrung. Durch die Endanschläge ist noch zuverlässiger gewährleistet, dass sich der Sperrriegel in der Verriegelungsstellung oder der Öffnungsstellung befindet, wenn das oder die Sicherungselemente mit dem oder den Sicherungsabschnitten des Sperrriegels in Eingriff gebracht werden. Hierdurch ergibt sich also eine verbesserte Funktionssicherheit. Besonders vorteilhaft ist es, wenn für den vorgenannten Eingriff des oder der versetzbaren Sicherungselemente und für die Bildung des oder der Endanschläge jeweils eine Vertiefung am Sperrriegel vorgesehen ist, da somit für mehrere Funktionen eine gleichartige Bearbeitung des Sperrriegels (Einbringen von Ausnehmungen) möglich ist. Hierdurch vereinfacht sich die Herstellung erheblich.

Weitere vorteilhafte Ausführungsformen der Erfindung sind in den Unteransprüchen, der Beschreibung und den Zeichnungen angegeben.

Die Erfindung wird nachfolgend anhand eines Ausführungsbeispiels mit Bezug auf die Zeichnungen beschrieben. Es zeigen:
- Fig. 1: ein Rahmenschloss in Explosionsdarstellung;
- Fig. 2: eine Aufsicht des Rahmenschlosses gemäß Fig. 1 unter Weglassung einiger Details;
- Fig. 3 und 4: perspektivische Ansichten des Rahmenschlosses gemäß Fig. 1 unter Weglassung einiger Details; und
- Fig. 5: eine perspektivische Detailansicht des Steuerelements und der Sicherungselemente des Rahmenschlosses gemäß Fig. 1.

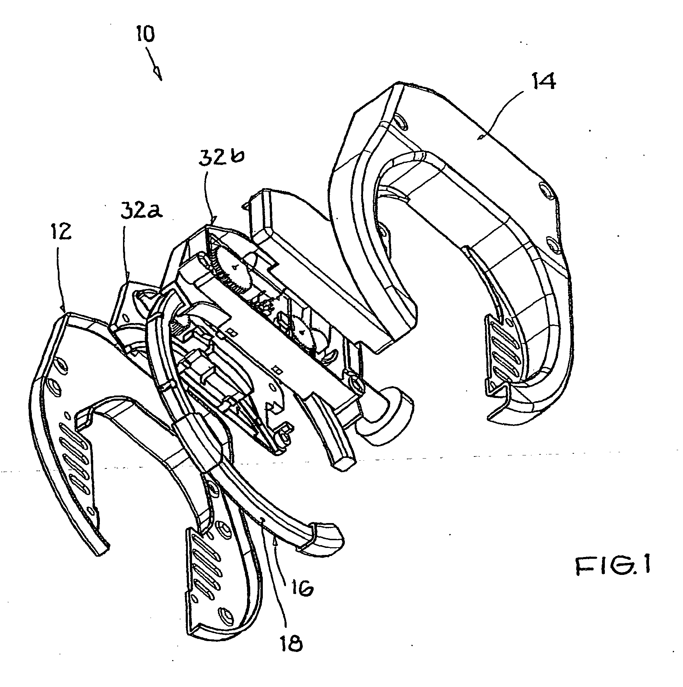

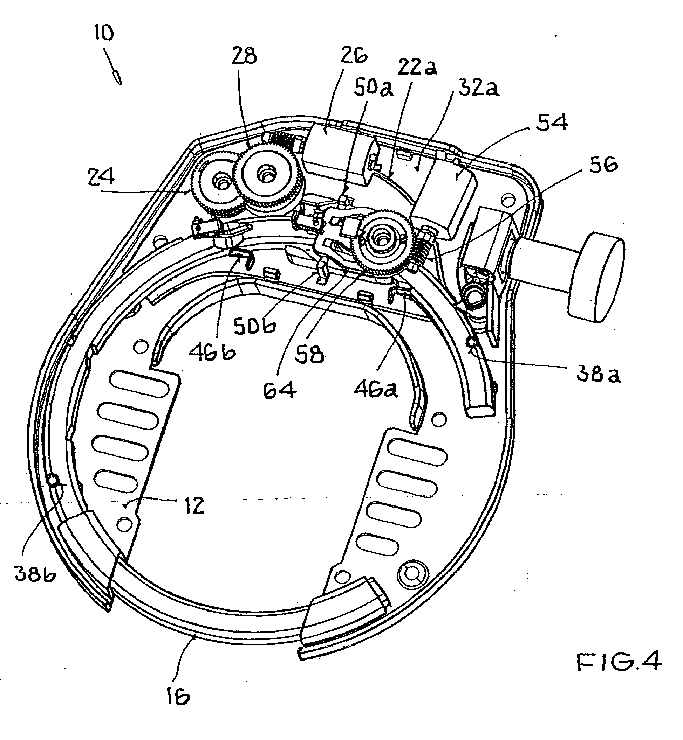

Fig. 1 bis 4 zeigen schematisch den Aufbau eines erfindungsgemäßen Zweirad-Schlosses beispielhaft anhand eines Rahmenschlosses 10 zur Montage an den Hinterradstreben eines Fahrrads.

Das Rahmenschloss 10 umfasst ein Außengehäuse, welches aus einem Unterteil 12 und einem Oberteil 14 zusammengesetzt ist und die weiteren Komponenten des Rahmenschlosses 10 umschließt.

Im Inneren des Rahmenschlosses 10 ist als Sperrriegel ein drehbarer Rundbügel 16 zum Umgreifen der Hinterradfelge vorgesehen. Zum Verstellen des Rundbügels 16 zwischen einer in den Fig. 1 bis 4 dargestellten Verriegelungsstellung und einer nicht dargestellten Öffnungsstellung ist an zwei voneinander beabstandeten Befestigungsstellen 38a, 38b des Au-βenumfangs 18 des Rundbügels 16 jeweils ein flexibles Metallband 20a bzw. 20b befestigt. Die Metallbänder 20a, 20b sind über eine jeweilige Führungsbahn 22a bzw. 22b zu einer Spule 24 geführt und auf dieser gegensinnig zueinander aufgewickelt, d.h. bei Drehung der Spule 24 in eine bestimmte Richtung wird das eine Metallband aufgewickelt während zugleich das andere Metallband abgewickelt wird.

Der Antrieb der mit einer Stirnradverzahnung versehenen Spule 24 erfolgt mittels eines Elektromotors 26, dessen Abtriebswelle die Spule 24 über eine Getriebeschnecke 30 und ein Zahnrad 28 in beide Drehrichtungen antreiben kann.

Die Führungsbahnen 22a, 22b teilen sich jeweils auf zwei Innengehäuseschalen 32a, 32b auf, welche im zusammengesetzten Zustand den Rundbügel 16 sowie die Metallbänder 20a, 20b umgreifen. Die Innengehäuseschalen 32a, 32b sind ferner mit verschiedenen Ausnehmungen, Vertiefungen und Bohrungen versehen, welche als Aufnahmen, Führungen oder Lager für verschiedene Komponenten des Rahmenschlosses 10 dienen. Im zusammengesetzten Zustand bilden die Innengehäuseschalen 32a, 32b sozusagen ein zweites Gehäuse, welches die Komponenten des Rahmenschlosses 10 lagegenau fixiert und zusätzlich zu dem Außengehäuse vor Verschmutzung oder einem gewaltsamen Zugriff schützt.

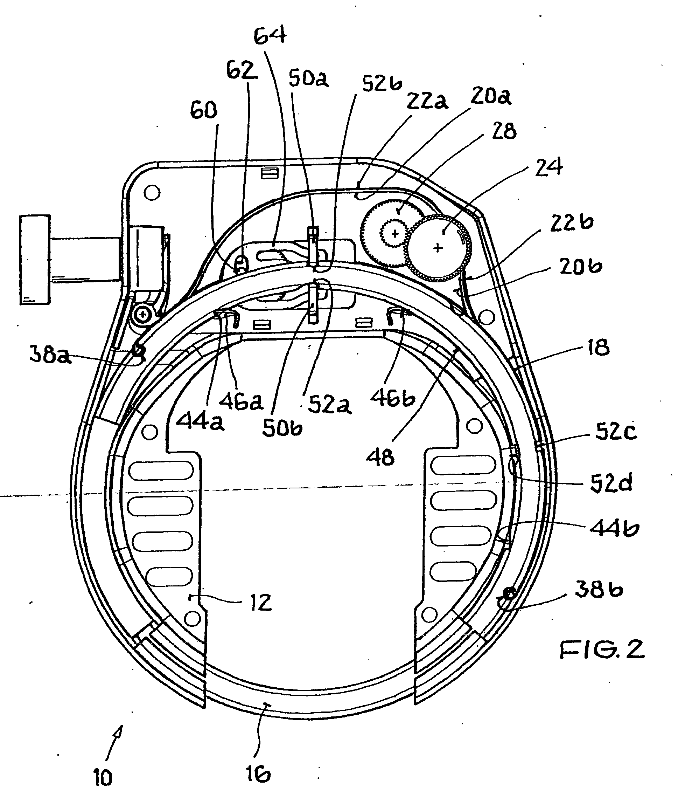

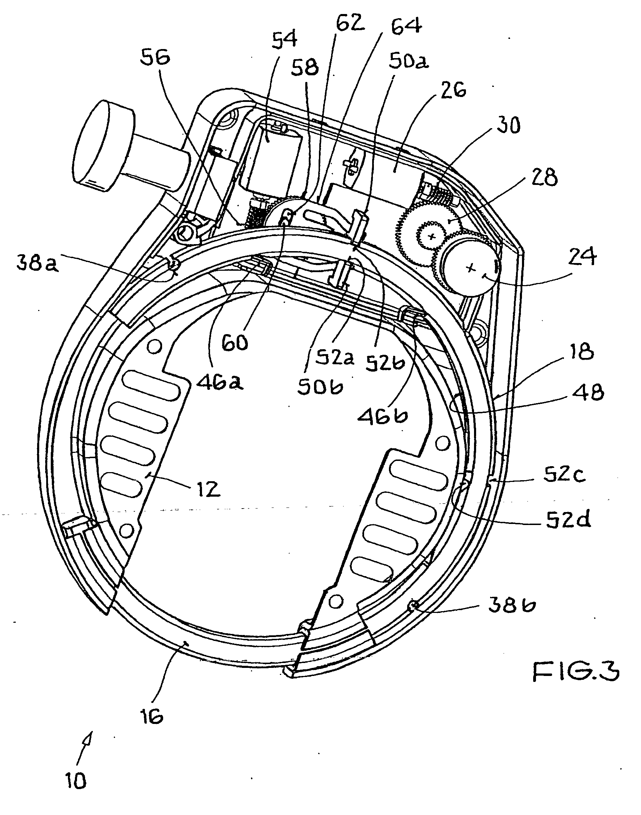

Mit Bezug auf Fig. 2 wird nun die Funktionsweise des Rundbügelantriebs erläutert. Um den Rundbügel 16 zu verstellen, wird die Spule 24 mittels des Elektromotors 26 (Fig. 3) angetrieben. Dadurch wird das eine Metallband auf die Spule 24 aufgewickelt, während das andere bereits teilweise auf die Spule 24 aufgewickelte Metallband von der Spule 24 abgewickelt wird. Somit bewegt sich der Rundbügel 16 in die gewünschte Verstellposition.

Als Endanschläge für die Verriegelungs- und Öffnungsstellung sind am Innenumfang 48 des Rundbügels 16 Kerben 44a, 44b vorgesehen, in die jeweils in Abhängigkeit von der Stellung des Rundbügels 16 eine von zwei Anschlagfedern 46a, 46b eingreifen kann. Wie in Fig. 2 zu erkennen ist, bildet die Kerbe 44a zusammen mit der Anschlagfeder 46a einen Endanschlag für die Verriegelungsstellung, während die Kerbe 44b zusammen mit der Anschlagfeder 46b einen Endanschlag für die Öffnungsstellung darstellt.

Zur Sicherung oder Blockierung des Rundbügels 16 in der Verriegelungs- bzw. Öffnungsstellung sind in den Innengehäuseschalen 32a, 32b zwei plättchenförmige, radial zur Drehrichtung des Rundbügels 16 linear verschiebbare Sicherungselemente 50a, 50b angeordnet, welche wahlweise mit schlitzförmigen, am Außenumfang 18 bzw. am Innenumfang 48 des Rundbügels 16 eingebrachten Vertiefungen 52a bis 52d in Eingriff bringbar sind. Die Vertiefungen 52a und 52d dienen somit als Sicherungsabschnitte. Die Vertiefungen 52b und 52c befinden sich am Außenumfang 18, während die Vertiefungen 52a und 52d am Innenumfang 48 vorgesehen sind. Wie in den Fig. 2 und 3 zu erkennen ist, wirken die Sicherungselemente 50a, 50b in der Verriegelungsstellung mit den Vertiefungen 52a, 52b zusammen, während in der Öffnungsstellung ein Eingriff mit den Vertiefungen 52c, 52d erfolgt. Durch das zangenartige Zusammenwirken der Sicherungselemente 50a, 50b mit den Vertiefungen 52a bis 52d wird eine besonders wirksame Sicherung oder Blockierung des Rundbügels 16 erreicht.

Die Betätigung der Sicherungselemente 50a, 50b erfolgt bei dem hier gezeigten Beispiel über einen weiteren Elektromotor 54, welcher über eine Getriebeschnecke 56 ein mit einer Stirnverzahnung versehenes weiteres Zahnrad 58 antreibt (vgl. Fig. 3). Das Zahnrad 58 weist einen exzentrisch zur Drehachse des Zahnrads 58 angeordneten Steuerzapfen 60 auf, welcher in ein als Kulissenführung dienendes Langloch 62 eines Steuerelements 64 eingreift (vgl. Fig. 2). Mittels des Steuerzapfens 60 und des Langlochs 62 wird eine Drehbewegung des Zahnrads 58 in eine Linearbewegung des Steuerelements 64 umgewandelt, wobei die Bewegungsrichtung des Steuerelements 64 tangential zur Drehrichtung des Rundbügels 16 verläuft.

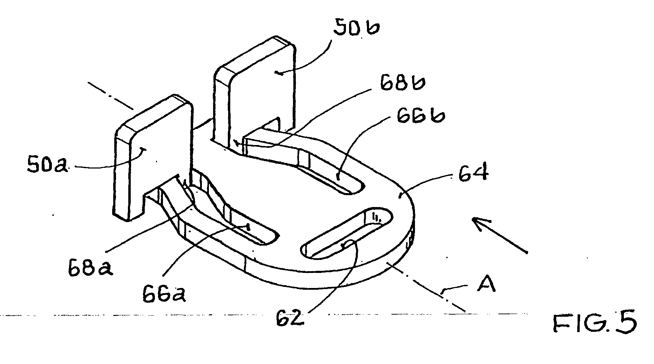

Wie in Fig. 5 gut zu erkennen ist, weist das Steuerelement 64 zwei längliche Kulissen 66a, 66b auf, welche spiegelbildlich zu einer Symmetrieachse A des Steuerelements 64 angeordnet sind. Die Sicherungselemente 50a, 50b weisen jeweils einen Steuerabschnitt 68a bzw. 68b auf, welcher in der jeweiligen Kulisse 66a, 66b aufgenommen ist. Da sich der Relativabstand der beiden Kulissen 66a, 66b voneinander in Richtung auf das Langloch 62 hin vergrößert, werden die beiden Sicherungselemente 50a, 50b, die sich in Fig. 5 in ihrer Sicherungsstellung befinden, bei einer Verschiebung des Steuerelements 64 in Pfeilrichtung voneinander weg bewegt und au-βer Eingriff mit den Vertiefungen 52a, 52b (Fig. 2 und 3) gebracht. In dieser Entsicherungsstellung ist es dann möglich, durch Betätigen des Elektromotors 26 den Rundbügel 16 von der Verriegelungsstellung in die Öffnungsstellung zu verstellen.

Die Zwangsführung der Sicherungselemente 50a, 50b in den jeweiligen Kulissen 66a, 66b gewährleistet eine besonders hohe Manipulationssicherheit, da ein unbefugtes Öffnen des Schlosses durch die eingangs erwähnte Hammerschlagmethode nicht möglich ist.

Das Rahmenschloss 10 weist ferner ein nicht dargestelltes Steuergerät auf, welches sowohl den Elektromotor 26 für die Verstellung des Rundbügels 16 als auch den Elektromotor 54 zur Verschiebung der Sicherungselemente 50a, 50b ansteuert. Dieses Steuergerät weist ferner Mittel zur Berechtigungsprüfung auf, sodass nur dann eine Verstellung des Rahmenschlosses 10 in die Öffnungsstellung erfolgt, wenn ein entsprechender Berechtigungscode - beispielsweise über ein Funksignal - empfangen wurde. Die Stromversorgung des Steuergerätes und der Elektromotoren 26, 54 kann netzunabhängig über eine Batterie oder einen Akkumulator erfolgen.

Wenn das Steuergerät einen derartigen, zur Öffnung des Rahmenschlosses 10 berechtigenden Befehl empfängt, steuert es zunächst den Elektromotor 54 an, um die Sicherungselemente 50a, 50b außer Eingriff mit den Vertiefungen 52a, 52b zu bringen. Nachfolgend wird der Elektromotor 26 derart angesteuert, dass sich die Spule 24 entgegen dem Uhrzeigersinn dreht und den Rundbügel 16 von der Verriegelungsstellung in die Öffnungsstellung dreht. Anschließend wird der Elektromotor 54 erneut betätigt, sodass die Sicherungselemente 50a, 50b nunmehr in Eingriff mit den Vertiefungen 52c, 52d gebracht werden, um den Rundbügel 16 in der Öffnungsstellung zu blockieren oder zu sichern, sodass ein ungewolltes Verriegeln des Fahrrades vermieden wird.

Auf einen entsprechenden Verriegelungsbefehl hin erfolgt die Betätigung der Elektromotoren 26, 54 sinngemäß in umgekehrter Reihenfolge.

Die Erkennung der Endlagen der Sicherungselemente 50a, 50b und/oder des Rundbügels 16 kann über eine Detektion des Motorstroms erfolgen, der bei Erreichen der Endlage, d.h. bei einer Blockierung des Rundbügels 16 bzw. der Sicherungselemente 50a, 50b ansteigt. Wahlweise können auch Positionssensoren zur direkten oder indirekten Detektion der jeweiligen Verstellpositionen vorgesehen werden.

Das im Ausführungsbeispiel erläuterte Schloss erlaubt ein komfortables, vollautomatisches Ver- und Entriegeln eines Zweirades, ohne dass vom Benutzer eine mechanische Verstellung durchgeführt werden muss. Grundsätzlich lässt sich der erfindungsgemäße Mechanismus auch bei einem Zweirad-Schloss mit manueller Betätigung des Sperrriegels einsetzen, d.h. bei einem Schloss ohne elektromechanischen Sperrriegelantrieb. In beiden Fällen ist eine einfache und kostengünstige Fertigung möglich und zugleich ein zuverlässiger Schutz gegen ein gewaltsames Öffnen zum Beispiel durch die oben erwähnte Hammerschlagmethode gegeben.

Weiterhin kann auch die Kulisse alternativ durch mechanische Mittel angetrieben werden, beispielsweise durch eine geeignete Kopplung mit einem Schließzylinder, so dass eine Drehbewegung des Schließzylinders in eine Längsbewegung des Steuerelements umgesetzt wird. Dabei kann das Steuerelement mittels einer Feder in Richtung der Sicherungsstellung oder in Richtung der Entsicherungsstellung vorgespannt sein.

Das anhand des Rahmenschlosses 10 erläuterte Sicherungsprinzip lässt sich ohne weiteres auch bei anderen Schlosstypen einsetzen, beispielsweise bei Rahmenschlössern für Zweiräder mit einem linear bewegten Sperrriegel oder einem Schwenkriegel.

### Bezugszeichenliste

- 10: Rahmenschloss
- 12: Unterteil
- 14: Oberteil
- 16: Rundbügel
- 18: Außenumfang
- 20a, 20b: Metallband
- 22a, 22b: Führungsbahn
- 24: Spule
- 26: Elektromotor
- 28: Zahnrad
- 30: Getriebeschnecke
- 32a, 32b: Innengehäuseschale
- 38a, 38b: Befestigungsstelle
- 44a,44b: Kerbe
- 46a, 46b: Anschlagfeder
- 48: Innenumfang
- 50a, 50b: Sicherungselement
- 52a - 52d: Vertiefung
- 54: Elektromotor
- 56: Getriebeschnecke
- 58: Zahnrad
- 60: Steuerzapfen
- 62: Langloch
- 64: Steuerelement
- 66a, 66b: Kulisse
- 68a, 68b: Steuerabschnitt

## Patentansprüche

1. Zweirad-Schloss, mit einem Sperrriegel (16), welcher zwischen einer Verriegelungsstellung und einer Öffnungsstellung verstellbar ist, wobei das Schloss zumindest ein Sicherungselement (50a, 50b) umfasst, welches zwischen einer Sicherungsstellung und einer Entsicherungsstellung versetzbar ist und mit einem Sicherungsabschnitt (52a-52d) des Sperrriegels (16) zusammenwirkt, um den Sperrriegel (16) in der Verriegelungsstellung und/oder der Öffnungsstellung zu sichern,
**dadurch gekennzeichnet ,**
**dass** das Sicherungselement (50a, 50b) einen Steuerabschnitt (68a, 68b) aufweist, welcher mit einer durch mechanische oder elektromechanische Mittel (54) angetriebenen jeweiligen Kulisse (66a, 66b) durch Zwangsführung zusammenwirkt, um das Sicherungselement (50a, 50b) zu versetzen.

2. Zweirad-Schloss nach Anspruch 1,
**dadurch gekennzeichnet ,**
**dass** das Sicherungselement (50a, 50b) senkrecht zur Verstellrichtung des Sperrriegels (16) versetzbar ist, und/oder dass der Sicherungsabschnitt des Sperrriegels (16) durch eine Eingriffsvertiefung (52a-52d) gebildet ist, mit der das Sicherungselement (50a, 50b) in der Sicherungsstellung in Eingriff steht.

3. Zweirad-Schloss nach Anspruch 1 oder 2,
**dadurch gekennzeichnet ,**
**dass** die Kulisse (66a, 66b) an einem Steuerelement (64) vorgesehen ist, das linear und/oder quer zu der Bewegungsrichtung des oder der Sicherungselemente (50a, 50b) bewegbar ist.

4. Zweirad-Schloss nach Anspruch 3,
**dadurch gekennzeichnet ,**
**dass** das Schloss zwei Sicherungselemente (50a, 50b) umfasst, deren Steuerabschnitte (68a, 68b) mit einer jeweiligen Kulisse (66a, 66b) in Eingriff stehen, wobei die Kulissen (66a, 66b) derart ausgebildet sind, dass beim Bewegen des Steuerelements (64) die Sicherungselemente (50a, 50b) gegenläufig zueinander versetzt werden und in einer Sicherungsstellung mit einem jeweiligen Sicherungsabschnitt (52a-52d) des Sperrriegels zusammenwirken, wobei die jeweiligen Sicherungsabschnitte (52a-52d) an einander gegenüberliegenden Seiten des Sperrriegels (16) vorgesehen sind.

5. Zweirad-Schloss nach Anspruch 3 oder 4,
**dadurch gekennzeichnet ,**
**dass** die mechanischen oder elektromechanischen Mittel (54) dazu ausgebildet sind, einen Steuerzapfen (60) oder Steuernocken exzentrisch um eine Achse drehbar anzutreiben, welcher mit dem Steuerelement (64) zusammenwirkt, um eine Rotation des Steuerzapfens (60) oder Steuernockens in eine Linearbewegung des Steuerelements (64) umzusetzen.

6. Zweirad-Schloss nach Anspruch 5,
**dadurch gekennzeichnet ,**
**dass** das Steuerelement (64) eine Kulissenführung aufweist, insbesondere ein quer zur Bewegungsrichtung des Steuerelements (64) ausgerichtetes Langloch (62), welche mit dem Steuerzapfen (60) oder Steuernocken zusammenwirkt.

7. Zweirad-Schloss nach einem der vorhergehenden Ansprüche,
**dadurch gekennzeichnet,**
**dass** das Schloss eine Steuereinrichtung zum Betätigen der elektromechanischen Mittel (54) aufweist, wobei die Steuereinrichtung Mittel zum Erkennen einer Verstellposition des Sperrriegels (16) aufweist und dazu ausgelegt ist, die elektromechanischen Mittel (54) zum Versetzen des oder der Sicherungselemente (50a, 50b) in die Sicherungsstellung nur dann zu betätigen, wenn sich der Sperrriegel (16) in der Verriegelungsstellung und/oder der Öffnungsstellung befindet, so dass das oder die Sicherungselemente (50a, 50b) mit dem oder den Sicherungsabschnitten (52a-52d) in Eingriff bringbar sind.

8. Zweirad-Schloss nach einem der vorhergehenden Ansprüche,
**dadurch gekennzeichnet,**
**dass** der Sperrriegel (16) mittels eines elektrischen Antriebs (26) zwischen der Verriegelungsstellung und der Öffnungsstellung verstellbar ist.

9. Zweirad-Schloss nach einem der vorgehenden Ansprüche,
**dadurch gekennzeichnet,**
**dass** der Sperrriegel (16) wenigstens eine Vertiefung (44a, 44b) aufweist, die mit einer Anschlagfeder (46a, 46b) zusammenwirkt, um einen Endanschlag für die Verriegelungsstellung oder die Öffnungsstellung des Sperrriegels (16) zu bilden.

10. Zweirad-Schloss nach einem der vorhergehenden Ansprüche,
**dadurch gekennzeichnet,**
**dass** das Schloss als Rahmenschloss (10) für ein Zweirad und der Sperrriegel (16) als ein drehbarer Rundbügel ausgebildet ist.

## Claims

1. A two-wheeler lock, having a locking bolt (16) which is adjustable between a locking position and an open position,
wherein the lock comprises at least one securing element (50a, 50b) which is displaceable between a securing position and a release position and cooperates with a securing section (52a-52d) of the locking bolt (16) to secure the locking bolt (16) in the locking position and/or in the open position,
**characterised in that**
the securing element (50a, 50b) has a cam section (68a, 68b) which cooperates by compulsory guidance with a respective link (66a, 66b) driven by mechanical or electromechanical means (54) to displace the securing element (50a, 50b).

2. A two-wheeler lock in accordance with claim 1,
**characterised in that**
the securing element (50a, 50b) is displaceable perpendicular to the direction of adjustment of the locking bolt (16); and/or
**in that** the securing section of the locking bolt (16) is formed by an engagement recess (52a-d) with which the securing element (50a, 50b) is in engagement in the securing position.

3. A two-wheeler lock in accordance with claim 1 or claim 2,
**characterised in that**
the link (66a, 66b) is provided at a control element (64) which is movable linear and/or transverse to the direction of movement of the securing element or elements (50a, 50b).

4. A two-wheeler lock in accordance with claim 3,
**characterised in that**
the lock comprises two securing elements (50a, 50b) whose cam sections (68a, 68b) are in engagement with a respective link (66a, 66b), wherein the links (66a, 66b) are configured such that, on the movement of the control element (64), the securing elements (50a, 50b) are displaced in opposite directions to one another and cooperate in a securing position with a respective securing section (52a-52d) of the locking bolt (16), with the respective securing sections (52a-52d) being provided at mutually oppositely disposed sides of the locking bolt (16) .

5. A two-wheeler lock in accordance with claim 3 or claim 4,
**characterised in that**
the mechanical or electromechanical means (54) are configured to rotatably drive a cam spigot (60) or a control cam eccentrically about an axis, said cam spigot or control cam cooperating with the control element (64) to convert a rotation of the cam spigot (60) or control cam into a linear movement of the control element (64).

6. A two-wheeler lock in accordance with claim 5,
**characterised in that**
the control element (64) has a link guide, in particular an elongate hole (62) orientated transverse to the direction of movement of the control element (64), said link guide cooperating with the cam spigot (60) or control cam.

7. A two-wheeler lock in accordance with any one of the preceding claims,
**characterised in that**
the lock has a control device for actuating the electromechanical means (54), with the control device having means for recognising an adjustment position of the locking bolt (16) and being adapted only to actuate the electromechanical means (54) to displace the securing element or elements (50a, 50b) into the securing position when the locking bolt (16) is located in the locking position and/or in the open position so that the securing element or elements (50a, 50b) can be brought into engagement with the securing sections (52a-52d).

8. A two-wheeler lock in accordance with any one of the preceding claims,
**characterised in that**
the locking bolt (16) is adjustable between the locking position and the open position by means of an electric drive.

9. A two-wheeler lock in accordance with any one of the preceding claims,
**characterised in that**
the locking bolt (16) has at least one recess (44a, 44b) which cooperates with an abutment spring (46a, 46b) to form an end abutment for the locking position or for the open position of the locking bolt (16).

10. A two-wheeler lock in accordance with any one of the preceding claims,
**characterised in that**
the lock is configured as a frame lock (10) for a two-wheeler and the locking bolt (16) is configured as a rotatable round hoop.

## Revendications

1. Cadenas pour deux-roues, comprenant une tige de verrouillage (16) qui est déplaçable entre une position de verrouillage et une position ouverte, dans lequel le cadenas comprend au moins un élément de blocage (50a, 50b) qui est déplaçable entre une position de blocage et une position de déblocage, et qui coopère avec une portion de blocage (52a-52d) de la tige de verrouillage (16), afin de bloquer la tige de verrouillage (16) dans la position de verrouillage et/ou dans la position ouverte,
**caractérisé en ce que**
l'élément de blocage (50a, 50b) comprend une portion de commande (68a, 68b) qui coopère par guidage à force avec un coulisseau respectif (66a, 66b) entraîné par des moyens mécaniques ou électromécaniques (54), afin de déplacer l'élément de blocage (50a, 50b).

2. Cadenas pour deux-roues selon la revendication 1,
**caractérisé en ce que** l'élément de blocage (50a, 50b) est déplaçable perpendiculairement à la direction de déplacement de la tige de verrouillage (16), et/ou
**en ce que** la portion de blocage de la tige de verrouillage (16) est formée par un renfoncement d'engagement (52a-52d) avec lequel l'élément de blocage (50a, 50b) est en engagement dans la position de blocage.

3. Cadenas pour deux-roues selon la revendication 1 ou 2,
**caractérisé en ce que** le coulisseau (66a, 66b) est prévu sur un élément de commande (64) qui est déplaçable de façon linéaire et/ou transversalement à la direction de déplacement du ou des éléments de blocage (50a, 50b).

4. Cadenas pour deux-roues selon la revendication 3,
**caractérisé en ce que** le cadenas comprend deux éléments de blocage (50a, 50b), dont les portions de commande (68a, 68b) sont en engagement avec un coulisseau respectif (66a, 66b), dans lequel les coulisseaux (66a, 66b) sont réalisés de telle manière que lors du déplacement de l'élément de commande (64) les éléments de blocage (50a, 50b) sont déplacés en sens inverse l'un par rapport à l'autre et, dans une position de blocage, coopèrent avec une portion de blocage respective (52a-52d) de la tige de verrouillage, et les portions de blocage respectives (52a-52d) sont prévues sur des côtés mutuellement opposés de la tige de verrouillage (16).

5. Cadenas pour deux-roues selon la revendication 3 ou 4,
**caractérisé en ce que** les moyens mécaniques ou électromécaniques (54) sont réalisés pour entraîner un tenon de commande (60) ou une came de commande de manière excentrique autour d'un axe, qui coopère avec l'élément de commande (64) pour convertir une rotation du tenon de commande (60) ou de la came de commande en un mouvement linéaire de l'élément de commande (64).

6. Cadenas pour deux-roues selon la revendication 5,
**caractérisé en ce que** l'élément de commande (64) comprend un guidage de coulisseau, en particulier un trou oblong (62) orienté transversalement à la direction de déplacement de l'élément de commande (64), qui coopère avec le tenon de commande (60) ou avec la came de commande.

7. Cadenas pour deux-roues selon l'une des revendications précédentes, **caractérisé en ce que** le cadenas comprend un moyen de commande pour actionner les moyens électromécaniques (54), ledit moyen de commande comprenant des moyens pour reconnaître une position de déplacement de la tige de verrouillage (16) et étant conçu pour actionner les moyens électromécaniques (54) afin de déplacer le ou les éléments de blocage (50a, 50b) jusque dans la position de blocage uniquement si la tige de verrouillage (16) se retrouve dans la position de verrouillage et/ou dans la position ouverte, de sorte que le ou les éléments de blocage (50a, 50b) peu(ven)t être amené(s) en engagement avec la ou les portions de blocage (52a-52d).

8. Cadenas pour deux-roues selon l'une des revendications précédentes,
**caractérisé en ce que** la tige de verrouillage (16) est déplaçable au moyen d'un entraînement électrique (26) entre la position de verrouillage et la position ouverte.

9. Cadenas pour deux-roues selon l'une des revendications précédentes,
**caractérisé en ce que** la tige de verrouillage (16) comporte au moins un renfoncement (44a, 44b) qui coopère avec un ressort de butée (46a, 46b) afin de former une butée terminale pour la position de verrouillage ou pour la position ouverte de la tige de verrouillage (16).

10. Cadenas pour deux-roues selon l'une des revendications précédentes,
**caractérisé en ce que** le cadenas est réalisé sous la forme d'un cadenas de cadre (10) pour un deux-roues, et la tige de verrouillage (16) est réalisée sous la forme d'un arceau rond rotatif.
